# EUROPEAN PATENT APPLICATION

(11) **EP 4 510 001 A1**
(43) Date of publication of application: **19.02.2025**
(21) Application number: 23191494.6
(22) Date of filing: 15.08.2023
(51) Int. Cl.: G06F 16/215

(54) **DATA SET EVALUATION BASED ON DATA LINEAGE ANALYSIS**

(71) Applicant: AB Initio Technology LLC, Lexington, Massachusetts 02421 (US)
(72) Inventor: DE JAGER, Dirk, Lexington, 02421 (US)
(74) Representative: Herrmann, Daniel

(57) **Abstract**

The present disclosure relates to a computer-implemented method, the method comprising: obtaining a data lineage whose structure specifies relationships among data sets of a plurality of data sets; analyzing the structure of the data lineage; based on a result of the analyzing, identifying a subset of the plurality of data sets for which a parameter is to be evaluated, wherein the subset includes one or more of the data sets, and wherein the parameter is for indicating a potential error within a data set; and outputting an indication of the identified subset of one or more data sets. A computer-readable medium, computer program and a corresponding data processing apparatus are described as well.

## Description

### TECHNICAL FIELD

The present invention relates to a computer-implemented method for identifying data sets to be evaluated based on a data lineage analysis, as well as to a corresponding computer program, corresponding computer-readable medium and to a corresponding data processing apparatus.

### BACKGROUND

An organization has to assess its data sets to verify that its data is free of errors to avoid errors in data processing. To do so, the organization may develop applications to evaluate data sets and execute those applications on the data sets in order to determine whether the requirements are met by the organization's data.

Conventional approaches to the assessment of data sets have turned out to be computationally expensive.

### SUMMARY OF THE INVENTION

It is thus an object of the present invention to reduce consumption of computational resources when assessing a plurality of data sets for a potential error within a data set.

This object is achieved by a computer-implemented method as defined by independent claim 1, by a computer-readable medium as defined by independent claim 17, by a data processing system as defined by independent claim 18, and by a computer program as defined by independent claim 19. Some of the preferred embodiments are described in the dependent claims, in the description and in the figures.

The inventors have recognized that conventional approaches to the assessment of data sets of a plurality of data sets, such as in an enterprise environment, involve the assessment of all data sets, but since there is nowadays a large number of such data sets (e.g., millions) in an enterprise environment, this approach becomes computationally expensive. The inventors have also recognized that the number of data sets to be assessed can be reduced significantly while keeping confidence in the data set assessment high when taking into account relationships among data sets of the plurality of data sets. The relationships among the data sets allow twofold: 1) identifying data sets that are, due to their relationships with other data sets, impactful for the assessment of the plurality of data sets, and b) reducing the number of data sets to be assessed by avoiding wasting resources on the assessment of data sets that are, due to their weak or not existing relationships with other data sets, of low or no impact for the assessment of the plurality of data sets. The inventors have recognized that increasing coverage for data sets is linear or only slightly beyond linear for data sets if no relationships among data sets are taken into account and is increased much beyond linear by taking into account the relationships among data sets. In this manner, the consumption of computational resources for the assessment of the plurality of data sets can be reduced significantly while keeping confidence in the data set assessment high. The inventors have further recognized that relationships among data sets of the plurality of data sets can be most effectively defined and analyzed for the identification of a subset data sets to be assessed by implementing these relationships in the structure of a data lineage, which adds to the overall computational efficiency for the identification of data sets to be assessed. That is, inventors have developed techniques that allow to assess only some of the data sets by using the data lineage to identify the data sets whose data should be assessed.

According to a general aspect of the present invention, a computer-implemented method is provided, the method comprising: obtaining a data lineage whose structure specifies relationships among data sets of a plurality of data sets; analyzing the structure of the data lineage; based on a result of the analyzing, identifying a subset of the plurality of data sets for which a parameter is to be evaluated, wherein the subset includes one or more of the data sets, and wherein the parameter is for indicating a potential error within a data set; and outputting an indication of the identified subset of one or more data sets. By obtaining a data lineage whose structure specifies relationships among data sets of a plurality of data sets and by using a result of analyzing the structure of the data lineage, a subset of the plurality of data sets, i.e. less than all data sets of the plurality of data sets (reduced number of data sets), whose data should be assessed is efficiently identified. Since coverage of parameter evaluation for data sets will increase slower with increasing number of data sets being assessed if no relationships or lineage among data sets was taken into account, the claimed approach allows to rapidly (much beyond linear) increase coverage of parameter evaluation by taking into account the relationships among data sets according to the structure of the data lineage. That is, means are provided for an assessment of a plurality of data sets for a potential error within a data set, which means allow to reduce the consumption of computational resources significantly while keeping confidence in the assessment high.

According to a preferred aspect of the present invention, the subset of the plurality of data sets for which the parameter is to be evaluated is identified such that a coverage of parameter evaluation within the plurality of data sets that would be provided by evaluating the parameter for the subset of the plurality of data sets exceeds a predetermined threshold coverage of parameter evaluation, which allows that the selection of the subset of the data sets is done to reduce computational expense while keeping high coverage of parameter evaluation within the plurality of data sets.

According to a preferred aspect of the present invention, the analyzing of the structure of the data lineage includes: calculating a score for each data set of the plurality of data sets such that a score for a given data set of the plurality of data sets is based on one or more characteristics of the analyzed structure of the data lineage and indicates a coverage of parameter evaluation within the plurality of data sets that would be provided by evaluating the parameter for the given data set. The score provides means to take into account characteristics of the analyzed structure of the data lineage when identifying the subset of data sets in a manner that individual data sets can be accurately distinguished in terms of coverage of parameter valuation within the plurality of data sets that would be provided by evaluating the parameter for the individual data sets. This allows to even better distinguish impactful data sets from less impactful data sets and allows to even more focus on impactful data sets and avoid wasting computational resources on less impactful data sets when assessing the priority of data sets for the parameter evaluation. That is, the selection of the subset of the data sets is done in a manner that further reduces computational expense while more effectively keeping high (e.g. maximizing) coverage of parameter evaluation, and hence confidence in the assessment, within the plurality of data sets.

Generally, each data set may include one or more data elements. Each data set may be a table, wherein each row or column is a data element of the data set.

According to a preferred aspect of the present invention, each data set of the plurality of data sets includes one or more data elements and the coverage of parameter evaluation of a given data set is in accordance with a number of data elements of the plurality of data sets for which the parameter is evaluated by evaluating the parameter for the one or more data elements of the given data set. The score being calculated may include or be based on the number of data elements of the plurality of data sets for which the parameter is evaluated by evaluating the parameter for the one or more data elements of the given data set. With increasing number of data elements of the plurality of data sets for which the parameter is evaluated by evaluating the parameter for the one or more data elements of the given data set, the score and/or the coverage of parameter evaluation of the given data set may be increased. Since the count of data elements affected according to the lineage is taken into account, the claimed approach allows to even further increase coverage of parameter evaluation beyond linear. That is, means are provided for an assessment of a plurality of data sets for a potential error within a data set, which means allow to reduce the consumption of computational resources significantly while keeping high (e.g. maximizing) coverage of parameter evaluation, and hence confidence in the assessment, within the plurality of data sets.

Preferably, the score calculated for each data set of the plurality of data sets is based on the one or more characteristics of the analyzed structure of the data lineage, wherein the one or more characteristics alternatively or further includes an indication of a number of protected data elements of other data sets that would be covered by the parameter evaluation for the given data set. Protected data elements of a given data set are data elements of other data sets that do exclusively depend on the (data elements of) the given data set or that do exclusively depend on those data elements of other data sets that exclusively depend on the (data elements of) the given data set, so that a potential error in the (data elements of the) given data set would propagate to the protected data elements and so that an absence of a particular error in the (data elements of the) given data set would also mean that the protected data element is free of that particular error. For example, the one or more characteristics include a number of second, preferably downstream, data elements, such as of other data sets, which depend on one or more data elements of the given data set in the data lineage such that the second elements are data elements that do exclusively depend on the one or more data elements of the given data set or that do exclusively depend on other data elements that exclusively depend on the one or more data elements of the given data set, preferably wherein each of the second data elements does not depend on a data element of any further data set of the plurality of data sets that is upstream to the second data element in the lineage. With increasing number of protected data elements (e.g. second data elements) being protected by parameter evaluation for a given data set, the coverage of parameter evaluation of the given data set may be increased. Since the count of protected data elements affected according to the lineage is taken into account, the claimed approach allows to even further increase coverage of parameter evaluation beyond linear. That is, means are provided for an assessment of a plurality of data sets for a potential error within a data set, which means allow to reduce the consumption of computational resources significantly while keeping high (e.g. maximizing) coverage of parameter evaluation, and hence confidence in the assessment, within the plurality of data sets.

According to a preferred aspect of the present invention, the score calculated for each data set of the plurality of data sets is based on the one or more characteristics of the analyzed structure of the data lineage, wherein the one or more characteristics alternatively or further includes a number of third downstream data elements which are downstream of one or more data elements of the given data set in the data lineage such that the third downstream elements depend on one or more data elements of the given data set, wherein each of the third downstream data elements is associated with execution metrics over a predetermined, and preferably past or recent, period of time. With increasing number of downstream data elements (e.g. third downstream data elements) which depend on the given data set and which are or have been involved in execution of a computer program for data processing, the coverage of parameter evaluation of the given data set may be increased. If there is elements are downstream of the given data set which data elements have been involved in execution of a computer program for data processing, the evaluation of the parameter at the given data set becomes more impactful, such as because the potential error at the data set can propagate to data elements that are involved in data processing, so that the parameter should be evaluated for the given data set.

According to a preferred aspect of the present invention, the score calculated for each data set of the plurality of data sets is based on the one or more characteristics of the analyzed structure of the data lineage, wherein the one or more characteristics alternatively or further include a number of fourth downstream data elements which are downstream of one or more data elements of the given data set in the data lineage such that the fourth downstream elements depend on one or more data elements of the given data set, wherein each of the fourth downstream data elements have been classified as key data elements, i.e. data elements of particular importance to the evaluation of the parameter.

According to a preferred aspect of the present invention, the one or more characteristics alternatively or additionally include profiling information of the given data set such as foreign key and/or primary key information (enhanced relationship information), minimum or maximum value, unique values in a field, common values, Shannon Entropy and/or common patterns within the one or more data elements of the given data set. By these characteristics, the coverage of parameter elevation can be further increased (e.g. maximized) while keeping computational resource consumption low

According to a preferred aspect of the present invention, the one or more characteristics alternatively or additionally include a number of data elements or data records associated with the given data set and/or a storage size of the given data set. A higher record count for a data set indicates a high likelihood of the data set being generated automatically or programmatically, such as transaction tables, which is therefore less prone to errors and it is computationally expensive when evaluating the parameter. A lower record count for a data set indicates a high likelihood of the data set being generated manually, which is therefore more prone to errors and it is computationally less expensive when evaluating the parameter.

According to a preferred aspect of the present invention, the method comprises generating the data lineage at least in part by performing (a) analyzing source code of at least one computer program configured to access at least some of the plurality of data sets to identify one or more data sets inputted to and accessed by the computer program, one or more transformations applied to inputs of the computer program and/or computations performed using inputs of the computer program, and one or more outputs of the computer program, and/or (b) analyzing information obtained during runtime of the at least one computer program including analyzing one or more logs generated during runtime of the computer program to identify inputs of the computer program, one or more transformations applied to inputs of the computer program and/or computations performed using inputs of the computer program, and one or more outputs of the computer program. By these means, the data lineage can be generated efficiently and comprehensively.

In other words, the inventors have developed a technique that evaluates the parameter of only some of the data sets by using the data lineage to identify the data sets for which the parameter should be evaluated. The selection is done to reduce computational expense while keeping high or even maximize coverage for parameter evaluation within the plurality of data sets. The data lineage is used to perform the selection because the data lineage indicates relationships between various data sets and those relationships can be used to determine the coverage for parameter evaluation that would be provided by evaluating the parameter at a given point. In particular, the technique involves analyzing a data lineage to identify data sets in the data lineage at which the parameter evaluation would provide the large or even maximum benefit. The identification involves scoring various data sets - the score indicates the benefit of evaluating the parameter for a particular data set. The score for a data set may depend on various characteristics of the structure of the data lineage including: number of protected data elements, number of incoming edges (inputs) into a node (in-degree), number of edges leaving a node (outputs, out degree), types of transformations performed, and/or other means to quantify downstream impact of parameter evaluation. For example, the larger the coverage or impact of parameter evaluation, the larger may be the score. The scores can then be used to identify the subset of data sets at which the parameter is to be evaluated. An indication of the identified subset of data sets can be outputted such as to provide the identified subset to the same or another application performing the evaluation of the parameter on the identified subset of data sets. According to a preferred aspect of the present invention, the method also includes causing the application to evaluate, for the identified subset of one or more data sets, the parameter in accordance with one or more criteria, such as to identify potential errors in the plurality of data sets.

According to a preferred aspect of the present invention, the method may involve displaying, in a data lineage diagram of the data lineage, a graphical element indicating a data set in the data lineage at which to evaluate the parameter. For example, the method may involve displaying a score indicative of the coverage, impact or benefit of evaluating the parameter at the indicated data set. The method may involve providing visualizations of the coverage, impact or benefit of evaluating the parameter at the indicated data set.

Preferably, the method may include outputting an indication of the coverage of parameter evaluation within the plurality of data sets that would be provided by evaluating the identified subset of one or more data sets. For example, the method may involve providing a graphic indicating identifiers and/or number of data sets and/or data elements that would be covered by evaluating the parameter at the subset of data sets. Preferably, the outputting of the indication of the coverage of parameter evaluation within the plurality of data sets includes illustrating, in a graphical user interface, a graphical indication of the coverage of parameter evaluation within the plurality of data sets that would be provided by evaluating the identified subset of one or more data sets. Preferably, the graphical indication of the coverage of parameter evaluation within the plurality of data sets is illustrated in association with a graphical representation of the data lineage preferably also of the plurality of data sets. Preferably, the graphical representation of the data lineage includes graphical representations of the plurality of data sets and the graphical indication of the coverage of parameter evaluation within the plurality of data sets is illustrated in association with the graphical representations of those data sets of the plurality of data sets for which the parameter is evaluated by evaluating the parameter for the identified subset of one or more data sets, preferably wherein the graphical indication of the coverage of parameter evaluation is graphically covering portions of the graphical representations of those data sets of the plurality of data sets for which the parameter is evaluated by evaluating the parameter for the identified subset of one or more data sets.

By these individual or combined graphical means, the user obtains a feedback about, e.g. whether or not the coverage of parameter evaluation within the plurality of data sets is sufficient (such as in accordance with predetermined requirements). This provides guidance to the user to adjust the characteristics to be taken into account when identifying the subset of data sets (e.g. when scoring) to obtained a desired coverage for parameter evaluation within the plurality of data sets and/or consumption of computational resources.

Computer (storage) media, preferably of non-transitory kind, and data processing apparatuses or computing systems can be provided that correspond to the methods described herein.

Other features and advantages will become apparent from the following description and the above summary is not meant to limit the scope of the invention.

### BRIEF DESCRIPTION OF THE DRAWINGS

Various aspects and embodiments will be described with reference to the following figures. It should be appreciated that the figures are not necessarily drawn to scale. Items appearing in multiple figures are indicated by the same reference number in all the figures in which they appear.
Figure 1A is a data lineage diagram indicating how parameter evaluation at data sets could be performed.
Figure 1B is a data lineage diagram indicating how parameter evaluation at data sets would be performed in accordance with some embodiments of the technology described herein.
Figure 2 illustrates an illustrative graphical representation of an illustrative, more detailed data lineage, in accordance with some embodiments of the technology described herein.
Figure 3 illustrates a block diagram of an illustrative computing environment, in accordance with some embodiments of the technology described herein.
Figure 4 illustrates coverage for parameter valuation within a plurality of data sets if data sets for which the parameter is to be evaluated is randomly selected
Figure 5 illustrates coverage for parameter valuation within a plurality of data sets if data sets for which the parameter is to be evaluated are selected in accordance with their number of data elements.
Figure 6 illustrates coverage for parameter valuation within a plurality of data sets if data sets for which the parameter is to be evaluated are selected in accordance with their number of associated protected data elements.
Figure 7 illustrates a data lineage.
Figure 8 illustrates a graphical user interface illustrating a data lineage.
Figure 9 illustrates a graphical user interface illustrating a data lineage in association with a graphical indication of the coverage for parameter evaluation with a plurality of data sets of the data lineage.

### DETAILED DESCRIPTION

According to the invention, a data lineage is used to identify a subset of a plurality of data sets for an evaluation of parameter indicating a potential error within a data set.

Data lineage is a data structure that describes relationships among physical components of a plurality of physical components, wherein each physical component includes one or more data sets and/or one or more transformations. In particular, data lineage describes the life cycle of data sets and their data elements to which the transformations are applied when being processed by a data processing system. Data lineage information for a given data set includes an identifier of one or more upstream data sets on which the given data set depends, one or more downstream data sets that depend on the given data set, and one or more transformations that process data to generate the given data set. By a particular component being "downstream" to a given component, we mean that the particular component is directly or indirectly dependent on the given data set. By a particular component being "upstream" to a given component, we mean that the given component is directly or indirectly dependent on the particular component. For example, by a downstream data set depending on an upstream data set, we mean that the processing of (one or more data elements of) the upstream data set by the data processing system directly or indirectly results in the generation of (one or more data elements of) the downstream data set. The generated downstream data set can be a data set that is output from the data processing system (sometimes referred to as an output data set) or can be a data set that is to be processed further by the data processing system (sometimes referred to as an intermediate data set). The upstream data set can be a data set input into the data processing system (sometimes referred to as an input data set or a reference data set) or a data set that has already undergone processing by the data processing system (sometimes referred to as an intermediate data set). A transformation is a data processing operation that is applied to an upstream data set to produce a downstream data set that is provided to a data sink. A data lineage diagram is a graphical depiction of the data lineage including physical components as well as relationships among the physical components in a data processing system.

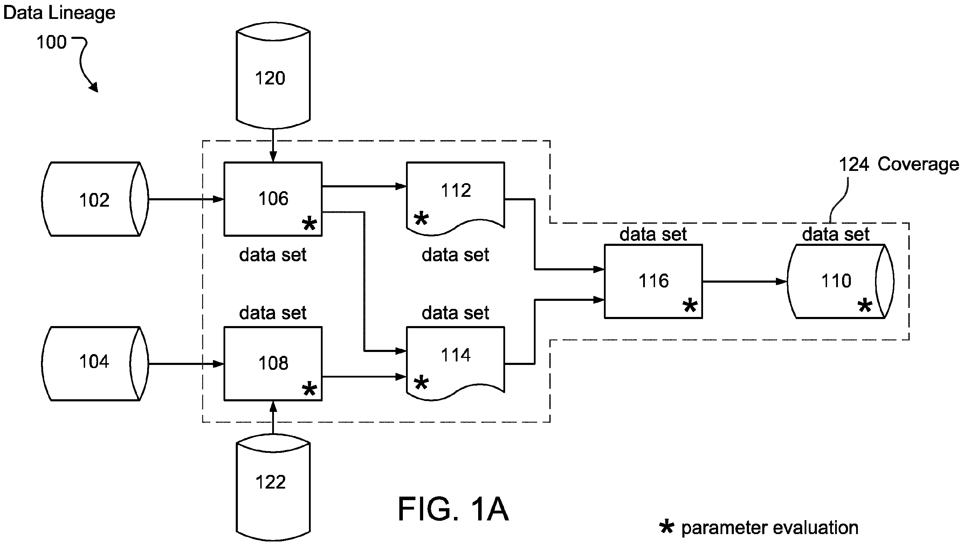

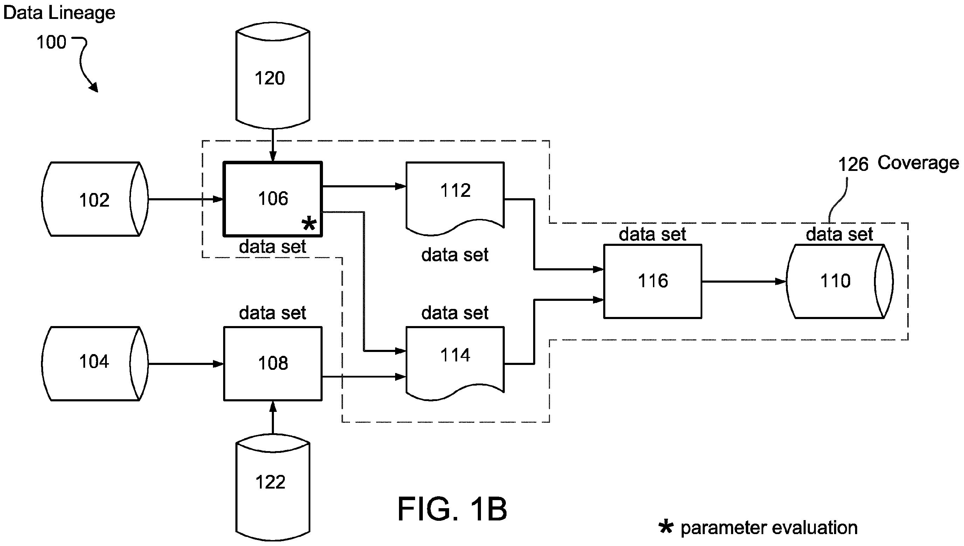

Figures 1A, 1B are each an example data lineage diagram 100 illustrating a plurality of physical components 102-122 and their relationships (see arrows). The data lineage diagram 100 is illustrating the data lineage for output data 110 generated by a data processing system. In the examples of Fig. 1A, 1B, the data processing system receives two sets of source data 102, 104. The source data can be data sets stored in or received from, for instance, a file such as a flat file, a database such as a relational database or an object database, a queue, or another repository for storing data in a computing system. For instance, a data set may generally be a (database) table, wherein each row or column is a data element of the data set. For example, the source data 102 can be data sets of credit card transactions in the U.S. stored in a file "US_feed.dat." Each data set can include a value for each of one or more fields, such as attributes defined within a record structure or columns in a database table. The source data 102, 104 can be received and processed in batches, for instance, data from a file or database that is processed hourly, daily, weekly, monthly, quarterly, yearly, or at another interval. The source data 102, 104 can be received as a stream and processed continuously, for instance, buffered by a queue and processed as data is available and system resources allow.

The data sets and/or data elements may be associated with transformations. The source data 102 is processed by a transform element 106, which operates on the source data 102, for instance, to change the source data 102 in some way. The transform element can be an executable program that can manipulate data, such as a java program executed within a virtual machine, an executable, a data flow graph, or another type of executable program. For instance, the transform element 106 can be an executable named "TransformA.exe". In a specific example, the transform elements 106 can be a filter component that filters out unwanted data sets or data elements from the source data 102, such as data sets or data elements having an incorrect format. The transform element 106 processes the source data 102 in view of reference data 120 to produce intermediate data 112. Reference data is data that is used by a transform element to enable the transform element to process of data. For instance, reference data that enables a mapping operation includes one or more fields having values that correspond to values in one or more fields in the data being processed. The intermediate data 112 can be stored in a file, a database, a queue, or another repository for storing data in a computing system.

A transform element 108 processes the set of source data 104 in view of reference data 122 to produce intermediate data 114. The intermediate data 114 can be stored in a file, a database, a queue, or another repository for storing data in a computing system.

The intermediate data 112, 114 are processed together by a transform element 116. Reference data can be used to process multiple sets of data and is unchanged by the processing.

The transform element 116 outputs the output data 110, which is stored in a file, a database, a queue, or another repository for storing data in a computing system. The output data 110 can be further processed, e.g., by other transform elements in the same data processing system or in a different data processing system, or can be stored for future analysis.

In the example of Fig. 1A, 1B, the data lineage of the output data 110 is shown for data lineage components in a single data processing system. In some examples, the data lineage of a set of data can be tracked through multiple data processing systems. For instance, source data can be initially processed by a first data processing system to produce output data X. A second data processing system reads the output data X from the first data processing system and processes the output data X to generate output data Y. The output data Y is processed by a third data processing system to generate output data Z. The data lineage of the output data Z includes the initial source data, the transforms included in each of the three data processing systems, and any reference data used during processing by any of the three data processing systems.

In Figure 1A, a parameter of a data set is evaluated at each of the data sets 106-116, as indicated by the stars in the data sets of Fig. 1A. The parameter is for indicating a potential error within the respective data set. As a result of parameter evaluation at each data set, a coverage 124 of parameter evaluation is reached within the data lineage, which covers all data sets 106-116. However, significant computational costs are required to perform all these parameter evaluations and to achieve such coverage.

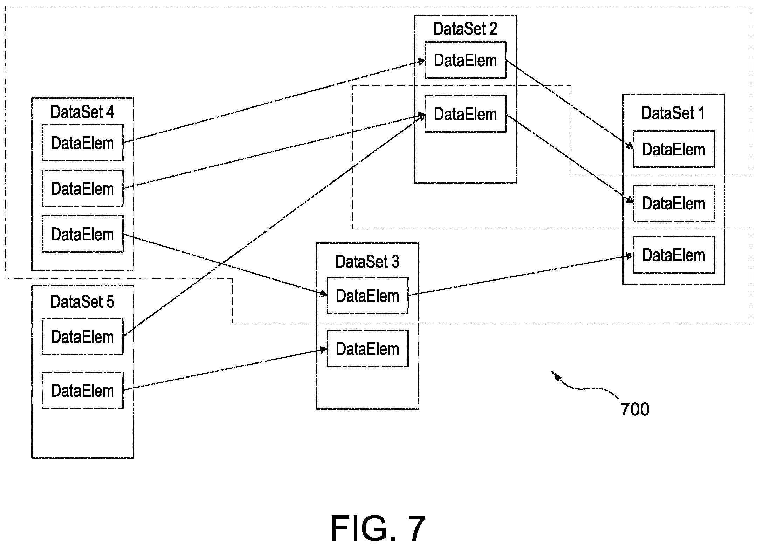

In Figure 1B, a parameter of a data set is evaluated only at a subset of the data sets, in this example here only at data set 106 as indicated by the star in the data set 106 of Fig. 1A. As a result of this single parameter evaluation, a coverage 126 of parameter evaluation is achieved, which covers all data sets 106-116, except data set 108 (data set 114 may be fully or partially covered). This leads to much less computational costs to achieve almost the same coverage of parameter evaluation. By evaluating the parameter at data set 106, the parameter is deemed to be evaluated also at data sets 110 to 116, for example because the data elements of data sets 110 to 116 do actually not depend on any other data sets than data set 106. An example of this concept is further explained in context of Figure 7, where one of several possible concepts are explained, namely the concept of number of data elements protected. Other concepts are possible as well, as further described below.

Accordingly, a computer-implemented method according to embodiments of the claimed invention comprises: obtaining a data lineage 100 whose structure specifies relationships among data sets of a plurality of data sets 106-116; analyzing the structure of the data lineage 100; based on a result of the analyzing, identifying a subset 106 of the plurality of data sets 106-116 for which a parameter is to be evaluated, wherein the subset 106 includes one or more of the data sets, and wherein the parameter is for indicating a potential error within a data set; and outputting an indication of the identified subset 106 of one or more data sets.

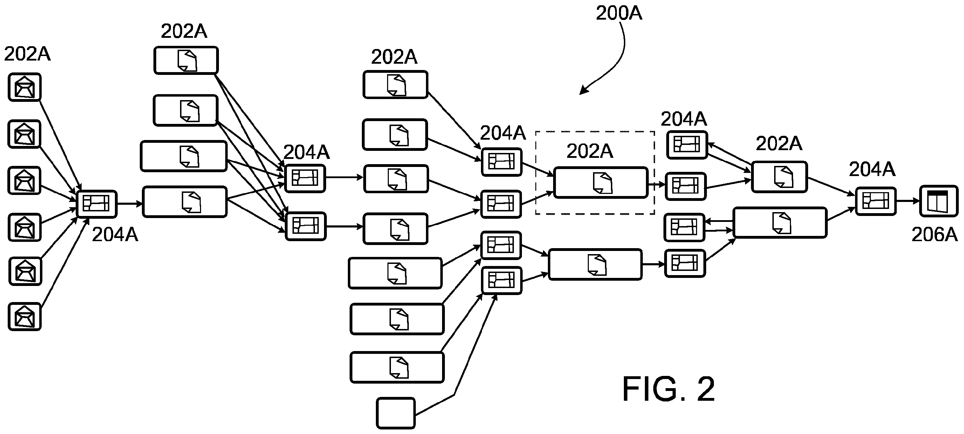

Figures 1A, 1B are each an example data lineage diagram 100. In some examples, output data can be generated by a more complex data processing system, such as shown in the example end-to-end data lineage diagram 200A of Fig. 2 for a target element 206A.

Figure 2 illustrates an example data lineage diagram 200A that is illustrating a plurality of physical components 202A-206A and their relationships (see arrows). In the data lineage diagram 200A, connections (see arrows) are shown between data sets 202A and transform elements 204A. Data sets 202A can represent tables, rows within tables, columns in tables, fields in tables or files, or other data. An example of a transform element is an element of an executable that describes how a single output of a data element is produced. The root cause of a potential error in a target component 206A (or in another intermediate component) can be tracked in the data processing system of Fig. 2.

The information shown in a data lineage diagram, such as the data lineage diagram of Fig. 1 or Fig. 2, illustrates which upstream data sources, data sets, data sinks, or transformations affect a downstream data set. For instance, the data lineage diagram 100 of Fig. 1 reveals that the output data 110 is affected by the source data 102, 104, the reference data 120, 122, and the transform elements 106, 108, 116.

Understanding the lineage of a downstream data set (such as the output data set 110) can be useful in identifying the root cause of an error in a data set that may occur in the downstream data set. By root cause, we mean an identification of an upstream component that is at least partially a cause of the error in the downstream component. An error in a downstream data set, such as in the output data set 110, can be due to erroneous source data, erroneous reference data, or an error in a transform element in the upstream lineage of the output data set 110, or a combination of any two or more of them. Tracking the quality or status of data lineage components can provide information that can be used to evaluate a possible root cause of errors in data sets.

By an error in a data set, we mean generally whether the data set has the expected characteristics, such as to avoid an error in data processing. An error in a data set can manifest in a set of data not behaving characteristics as expected, for instance, falling outside of statistical norms, returning a lookup failure in response to a standard query, or another type of behavior. The parameter to be evaluated may be a measure for a quality of data or program code associated with the data set. The parameter evaluation or quality of a set of data can be characterized based on a profile of some or all of the data sets in the set of data or based on the value in each of one or more fields of a specific data set or both.

An error in a set of downstream data (e.g., the output data 110) can be traced to any of various factors in the upstream data lineage of the output data set. One possible cause of erroneous output data can be erroneous source data, erroneous reference data, or erroneous transform logic, or a combination of these factors. For instance, a set of source data may have been corrupted or cut off during transmission, may be the wrong set of data, may have missing data, or may have another problem. A set of reference data may have been exposed to an error in a recent update to the set of reference data, may be corrupted, may be the wrong set of data, or may have another problem. Another possible cause of poor quality output data can be an issue with a transform element in the upstream data lineage of the output data. For instance, if the software implementing a transform element was recently updated to a new version, the transform element may no longer perform the desired processing if, for example, the updated software has an error or has been corrupted. Source data, reference data, and transform elements in the data lineage of the set of output data 110 can be monitored to facilitate preemptive identification of a potential errors like data quality issue that may occur in the set of output data, subsequent tracking of the root cause of an error that occurred in the set of output data, or both.

Monitoring and analysis of the source data and reference data can help a user or system to diagnose one or more possible causes of erroneous output data. For instance, if a set of erroneous output data is generated, analysis of the source data or reference data in the data lineage of the set of poor quality output data can indicate whether a given set of source data or reference data is itself erroneous and thus a possible contributor to the erroneous output data. Monitoring of the source data and reference data can also preemptively identify erroneous source data or reference data that, if processed, may cause an error like a data quality issue in downstream output data.

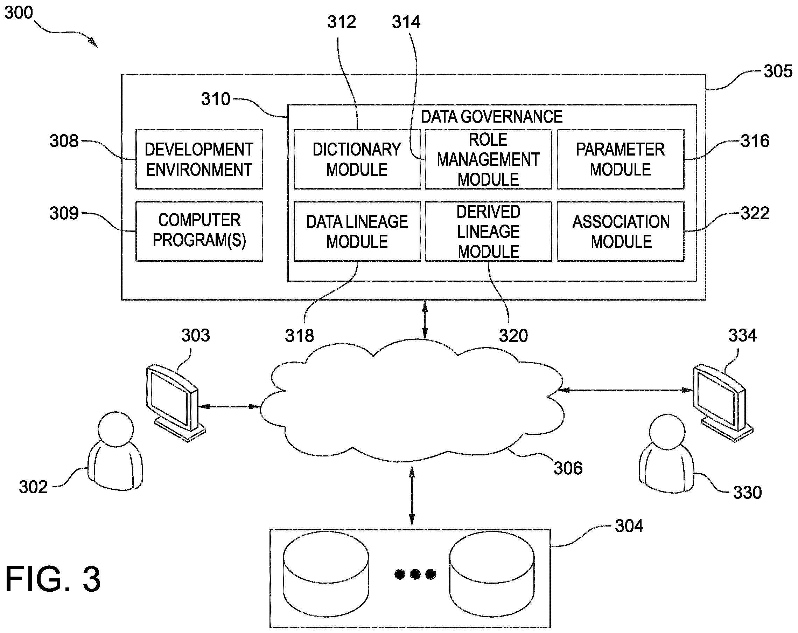

Figure 3 is a block diagram of an illustrative computing environment 300, in which some embodiments of the technology described herein may operate. Computing environment 300 includes data processing system 305, which is configured to operate on data stored in data store 304.

The data store 304 may include one or multiple storage devices storing data sets in one or more formats of any suitable type. For example, the storage device(s) part of data store 304 may store data sets in form of one or more database tables, spreadsheet files, flat text files, and/or files in any other suitable format (e.g., a native format of a mainframe). The storage device(s) may be of any suitable type and may include one or more servers, one or more database systems, one or more portable storage devices, one or more non-volatile storage devices, one or more volatile storage devices, and/or any other device(s) configured to store data electronically. The data store 304 may include one or more online data streams of data sets in addition to or instead of storage device(s). Accordingly, for example, data processing system 305 may have access to data sets provided over one more data streams in any suitable format.

In aspects where data store 304 includes multiple storage devices, the storage devices may be co-located in one physical location (e.g., in one building) or distributed across multiple physical locations (e.g., in multiple buildings, in different cities, states, or countries). The storage devices may be configured to communicate with one another using one or more networks such as, for example, network 306 shown in Fig. 1.

The data sets stored by the storage device(s) may include one or multiple data entities such as one or more files, tables, data in rows and/or columns of tables, spreadsheets, data sets, data records (e.g., credit card transaction records, phone call records, and bank transaction records), fields, variables, messages, and/or reports. The storage device(s) may store thousands, millions, tens of millions, or hundreds of millions of data entities. Each data set may include one or multiple data elements.

A data element may be any data element stored and/or processed by a data processing system. For example, a data element may be a field in a data record, and the value of the data element may be the value stored in the field of the data record or may be a column or row of a (database) table. As a specific non-limiting example, a data element may be a field storing a caller's name in a data record storing information about a phone call (which data record may be part of multiple data records about phone calls made by customers of a telecommunication's company) and the value of the data element may be the value stored in the field. As another example, a data element may be a cell in a table (e.g., a cell occurring at a particular row and column of the table) and the value of the data element may be the value in the cell of the table. As another example, a data element may be a variable (e.g., in a report) and the value of the element may be value of the variable (e.g., in a particular instance of the report). As a specific non-limiting example, a data element may be a variable in a report about a bank loan applicant representing the applicant's credit score, and the value of the data element may be the numeric value of the credit score (e.g., a numeric value between 300 and 850). The value of the data element representing the applicant's credit score may change depending on the data used to generate the report about the bank loan applicant.

A data element may take on a value of any suitable type. For example, a data element may take on a numeric value, an alphabetic value, a value from a discrete set of options (e.g., a finite set of categories), or any other suitable type of value, as aspects of the technology described herein are not limited in this respect.

Data processing system 305 may include one or multiple computer programs 309 configured to operate on data in data store 304. The computer programs 309 may be of any suitable type and written in any suitable programming language(s). For example, computer programs 309 may include one or more computer programs written at least in part using the structured query language (SQL) and configured to access data in one or more databases part of data store 304. As another example, data processing system 305 is configured to execute programs in the form of graphs and computer programs 309 may comprise one or more computer programs developed as dataflow graphs. A dataflow graph may include components, termed "nodes" or "vertices," representing data processing operations to be performed on input data and links between the components representing flows of data. Techniques for executing computations encoded by dataflow graphs are described in U.S. Patent No.: 5,966,072, titled "Executing Computations Expressed as Graphs".

In the example of Fig. 3, data processing system 305 further includes development environment 308 that may be used by a person (e.g., a developer) to develop one or more of computer programs 309 for operating on data in data store 304. For example, user 302 may use computing device 303 to interact with development environment 308 to specify a computer program 309, such as a dataflow graph, and save the computer program as part of computer programs 309. For example, user 302 may use computing device 303 to interact, via network 306, with other users 330 of other computing devices 334. An environment for developing computer programs as data flow graphs is described in U.S. Pat. Pub. No.: 2007/0031668, titled "Managing Parameters for Graph-Based Applications".

One or more of computer programs 309 may be configured to perform any suitable operations on data in data store 304. For example, one or more of computer programs 309 may be configured to access data from one or more sources, transform the accessed data (e.g., by changing data values, filtering data records, changing data formats, sorting the data, combining data from multiple sources, splitting data into multiple portions, and/or in any other suitable way), calculate one or more new values from accessed data, and/or write the data to one or multiple destinations.

One or more of computer programs 309 may be configured to perform computations on and/or generate reports from data in data store 309. The computations performed and/or reports generated may be related to one or more quantities relevant to a business. For example, a computer program may be configured to access credit history data for a person and determine a credit score for the person based on the credit history. As another example, a computer program may access telephone call logs of multiple customers of a telephone company and generate a report indicating how many of the customers use more data than allowed for in their data plans. As yet another example, a computer program may access data indicating the types of loans made by a bank and generate a report indicating the overall risk of loans made by the bank. These examples are illustrative and non-limiting, as a computer program may be configured to generate any suitable information (e.g., for any suitable purpose business or technology) from data stored in data store 304.

In the example of Fig. 3, data processing system 305 may also include a data governance module 310 that supports the performance of various data governance tasks. For example, in the illustrated embodiment, data governance module 310 includes data dictionary module 312, role management module 314, parameter evaluation module 316, data lineage module 318, derived lineage module 320, and lineage association module 322, each of which comprises processor-executable instructions that, when executed, perform functionality supporting the performance of one or more data governance tasks, as described in greater detail below.

The data dictionary module 312 may be configured to store information about data in data store 304. That is, data dictionary 312 may be configured to store metadata associated with data in data store 304. For example, data dictionary 312 may store one or more alternative names for data elements in data store 304. In this way, rather than referring to a data element by the name of the variable to which it corresponds (which variable name may have been created by a programmer and is not "user-friendly" in that it does not immediately convey to a user what information the variable represents), the data dictionary may include one or more alternative terms for the data element such as, for example, a natural language term or phrase that business people would use to refer to the data element. As a specific example, the data dictionary 312 may store the name "Bank Customer Credit Score" or "Bank Customer FICO Credit Score" as an alternative name for a data element corresponding to a variable named "cstCrdScr," which stores the value of a FICO credit score for a particular bank customer. As another specific example, the data dictionary 312 may store the name "Order Amount" as language that may be used for referring to the data element corresponding to a field named "order_amt."

The role management module 314 may manage information indicating which party or parties are responsible for various data elements stored in data store 304. Managing such role information may include storing the role information, allowing one or more users to modify such information (e.g., by removing, adding, or changing parties and/or their responsibilities), and/or displaying the role information.

The role management module 314 may specify responsible parties for one or more data elements and/or one or more business data elements. For example, role management module 314 may be configured to manage information used for generating (and may be configured to generate) a graphical interface indicating parties accountable for management of a data element.

The parameter evaluation module 316 may be configured to evaluate one or more parameters indicating a potential error within a data set and/or its one or more data elements. The parameter may be defined in any suitable way that indicates a potential error within a data set. The parameter may be a measure for a quality of data or program code associated with the data set. The parameter may be evaluated using predefined parameter rules, which may define criteria for evaluating the values of data sets and/or their data elements, such as by identifying characteristics (e.g., accuracy, precision, completeness, and validity) of the values according to the criteria. The extent to which the values exhibit these characteristics may thereby produce a measure of data quality for the data set and/or data elements. Aspects of evaluating the quality of data using data quality rules are described in U.S. Pat. Pub. No.: 2014/0308357, "Specifying and Applying Rules to Data".

The data lineage module 318 may be configured to generate a data lineage for at least some of the data in data store 304. A data lineage may include information about the lineage of one or physical components including data sets and optionally transformations. For example, a derived data linage may include upstream lineage information indicating how the value of an upstream physical component was obtained and/or downstream lineage information indicating one or more other downstream physical components that depend on the value of the upstream physical component.

The data lineage module 318 may be configured to generate a data lineage, such as the data lineage 100, 200A of Figures 1 and 2, respectively, by analyzing the source code of at least one computer program configured to access (e.g., read, write, and modify) at least some of the plurality of physical components managed by a data processing system. The source code analysis may be used to identify inputs to a computer program (e.g., identify one or more data sets accessed by the computer program), identify one or more transformations applied to the inputs and/or computations performed using the inputs as part of the computer program, and/or identify one or more outputs of the computer program. The computer program may comprise a dataflow graph.

The data lineage module 318 may be configured to generate a data lineage, such as the data lineage 100, 200A of Figures 1 and 2, respectively, by analyzing information obtained during runtime of the at least one computer program. For example, one or more logs generated during runtime of a computer program may be analyzed to identify inputs to the computer program, one or more transformations applied to the inputs and/or computations performed using the inputs as part of the computer program, and/or one or more outputs of the computer program.

The data lineage module 318 may be configured to generate a data lineage, such as the data lineage 100, 200A of Figures 1 and 2, respectively, by using one or more data discovery processes. For example, a computer program implementing a data discovery may be configured to identify different data sets containing the same data values and, based on that identification, determine that these data sets are related. For example, the computer program may be configured to determine that a same table of data is stored in multiple different databases and, on that basis, determine that the data elements in these tables are related. It should be appreciated that the data lineage module 318 may be configured to generate a data lineage using any of the above-described ways or any combination of two or more of the above-described or other ways, as aspects of the technology described herein are not limited in this respect.

The derived lineage module 320 may be configured to facilitate the generation of a derived lineage by a system (e.g., a computer system). The derived lineage module 320 may indicate lineage relationships among components of the derived lineage.

The association module 322 may be configured to facilitate the generation of an association between the data lineage and a lineage derived from the data lineage. To this end, association module 322 may generate, for each of one or more components of the derived lineage, an association between the component of the derived lineage and one or more corresponding physical components of the data lineage.

Coming back to Figure 2, the computer-implemented method according to the invention includes obtaining a data lineage 200A whose structure specifies relationships (see arrows in Figure 2) among data sets of a plurality of data sets 202A; analyzing the structure of the data lineage; based on a result of the analyzing, identifying a subset (see, e.g. the data set in the dashed rectangle in Figure 2) of the plurality of data sets for which a parameter is to be evaluated, wherein the subset includes one or more of the data sets, and wherein the parameter is for indicating a potential error within a data set; and outputting an indication of the identified subset of one or more data sets. Preferably, the subset of the plurality of data sets for which the parameter is to be evaluated is identified such that a coverage of parameter evaluation within the plurality of data sets that would be provided by evaluating the parameter for the subset of the plurality of data sets exceeds a predetermined threshold coverage of parameter evaluation. For example, the analyzing of the structure of the data lineage includes: calculating a score for each data set of the plurality of data sets such that a score for a given data set of the plurality of data sets is based on one or more characteristics of the analyzed structure of the data lineage and indicates a coverage of parameter evaluation within the plurality of data sets that would be provided by evaluating the parameter for the given data set.

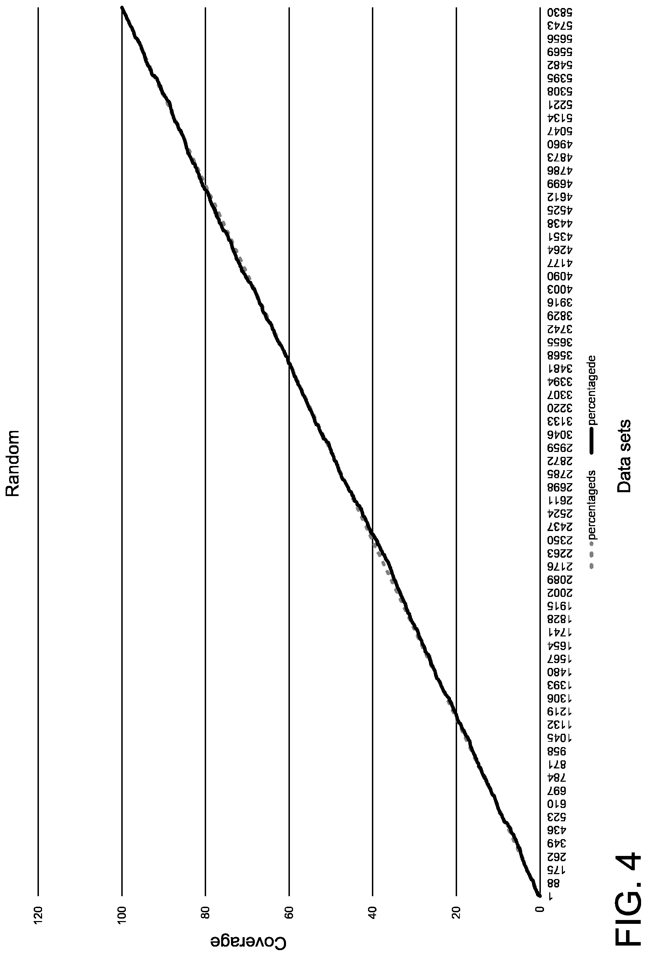

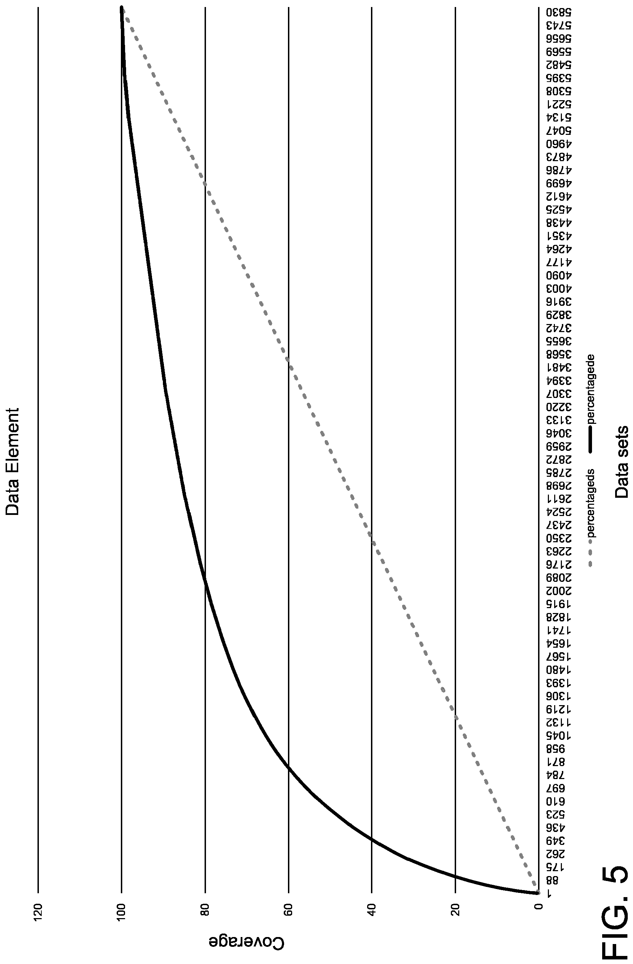

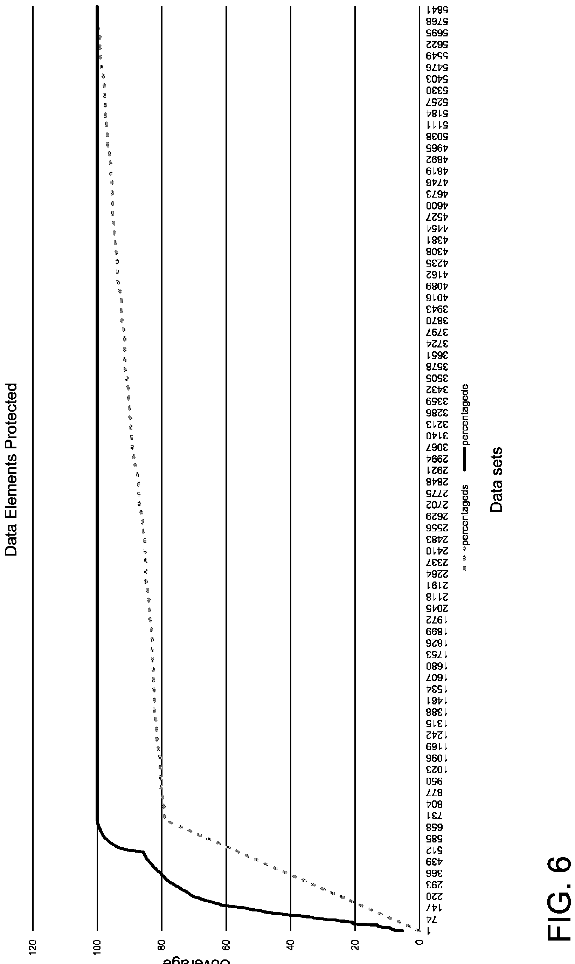

Figures 4 to 6 shows the coverage of parameter evaluation (in percent) within a plurality of data sets versus identifiers of the data sets. In these examples the parameter is evaluated for 5830 data sets. In Figure 4, the data set for which the parameter is evaluated is randomly selected until all data sets have been evaluated and the coverage which is 100%. The plurality of data sets of Figure 4 may not have lineage or they may have lineage but the lineage is not taken into account. However, large coverage can already be achieved without having to evaluate the parameter for all of the data sets as illustrated by Figures 5 and 6. The inventors have determined that increasing coverage for data sets is linear for data sets if no relationships among data sets (lineage) are taken into account (Figure 4) and is increased beyond linear by taking into account the number of data elements of the data sets, i.e, sorting the data sets in accordance with their number of data elements, such that first the parameter is evaluated for the data sets having more data elements than others (Figure 5). The increase in coverage from Figure 4 to Figure 5 is due to taking into account the number of data elements of a given data set, in particular taking into account number of data elements that belong to the given data set, such that data sets with larger number of data elements are evaluated first.

However, the inventors have further determined that data sets having a large number of data elements may have data elements that have only little impact on other data elements (low degree of lineage), so that the increase in coverage shown in Figure 5 for the first data sets may be lower in such cases, so that the upper curve in Figure 5 may show a dip at the rise of the curve. The inventors have recognized that the coverage of parameter evaluation is significantly and reliably increased beyond linear for any data sets by taking into account the relationships (lineage) among the data sets (Figure 6). The further increase in coverage from Figure 5 to Figure 6 is due to taking into account an impact of a parameter evaluation of a given data set on data elements of any data sets in the plurality of data sets. For example, the number of "protected data elements" of a given data set is taken into account, such as a number of second, preferably downstream, data elements, such as of other data sets, which depend on one or more data elements of the given data set in the data lineage such that the second elements are data elements that do exclusively depend on the one or more data elements of the given data set or that do exclusively depend on other data elements, such as of other data sets, that exclusively depend on the one or more data elements of the given data set. That is, the protected data elements are affected by data elements of the given data set such that any error in the given data set would propagate to the protected data elements or if the given data set is free of an error, the protected data elements would also be free of that error.

In experiments, the number of data sets to be evaluated to achieve a high predetermined coverage (> 80%) could be reduced by about 92% when moving from Fig. 4 to Fig. 6 and by about 82% when moving from Fig. 5 to Fig. 6. Thus, the consumption of computational resources can be significantly reduced when selecting a subset of data sets to be evaluated by taking into account lineage compared to not taking lineage into account. This significant reduction in consumption of computational resources is achieved without jeopardizing the confidence in the parameter evaluation and hence the assessment of the plurality of data sets.

Figure 7 illustrates example data lineage 700 with a plurality of data sets 1 to 5, wherein the data lineage 700 describes relationships (see arrows in Fig. 7) among the data sets of the plurality of data sets. Figure 7 also describes an example to illustrate how the score can be calculated for a given data set according to the invention. In the example of Figure 7, each data set (DS) of the plurality of data sets 1 to 5 includes one or more data elements and the number of protected data elements can be taken into account in the calculation for the score for a given data set. The subset of the plurality of data sets 1 to 5 to perform the evaluation of the parameter is identified in accordance with the scores calculated for the data sets of the plurality of data sets. The subset of the data sets 1 to 5 can be identified such a coverage of that parameter evaluation within the plurality of data sets 1 to 5 that would be provided by evaluating the parameter for the subset of the plurality of data sets exceeds a predetermined threshold coverage of parameter evaluation. The coverage of parameter evaluation within the plurality of data sets that would be provided by evaluating the parameter for the subset of the plurality of data sets can be determined based on the scores calculated for the one or more data sets in the subset.

The score calculated for each data set 1 to 5 of Figure 7 is based on a characteristic of the analyzed structure of the data lineage, wherein the characteristic includes an indication of a number of protected data elements of other data sets that would be covered by the parameter evaluation for the given data set. Protected data elements of a given data set are data elements of other data sets that do exclusively depend on the (data elements of) the given data set or that do exclusively depend on those data elements of other data sets that exclusively depend on the (data elements of) the given data set, so that a potential error in the given data set would likely propagate to the protected data elements and so that an absence of an error in the given data set would also mean that the protected data element is likely free of the error.

When considering the calculation of the score for a given data set in Figure 7, the one or more characteristics based on which the score is calculated may include a number of second, preferably downstream, data elements, such as of the other data sets, which depend on one or more data elements of the given data set in the data lineage such that the second elements are data elements that do exclusively depend on the one or more data elements of the given data set or that do exclusively depend on other data elements that exclusively depend on the one or more data elements of the given data set. Preferably each of the second data elements does not depend on a data element of another data set of the plurality of data sets that is upstream to the second data element in the lineage.

Since there are no data elements that depend on the data elements of data set 1, data set 1 gets a score of zero and is therefore unattractive for inclusion into the subset of data sets to be evaluated for the parameter. There are two data elements of data set 1 which exclusively depend on data elements in data set 2, so that data set 2 is associated with two protected data elements and obtains a score of two. Since there is only one data element, namely the third data element in data set 1, which exclusively depends on a data element of data set 3, data set 3 is associated only with one protect data element and obtains a score of 1.

For data set 4, there are not only data elements that exclusively depend on data elements of the data set 4, but there are also data elements that exclusively depend on data elements which in turn exclusively dependent on data elements of data set 4. In particular, the first data element of data set 2 is exclusively dependent on a data element of data set 4 and is therefore included in the calculation of the score for data set 4. However, the second data element of data set 2 does not only depend on a data element of data set 4 but also depends on a data element of data set 5 and is therefore not exclusively dependent on a data element of data set 4 and is therefore not included in the calculation of the score for data set 4. In addition, the first data element of data set 3 is exclusively dependent on a data element of data set 4 and is therefore included a calculation of a score for data set 4. Moreover, the first data element of data set 1 and the third data element of data set 1 both depend on data elements which are exclusively dependent on data elements of data set 4 and are therefore included in the calculation of the score for data set 4. In particular, the first data element of data set 1 exclusively depends on the first data element of data set 2 which in turn exclusively depends on the first data element of data set 4 and the third data element of data set 1 exclusively depends on the first data element of data set 3 which in turn exclusively depends on the third data element of data set 4. In other words, the data elements of data set 5 do not affect the data elements contributing to the calculation of the score for data set 4. Thus, data set 4 is associated with four protected data elements and obtains a score of 4.

Finally, data set 5 is associated with a score of 1, because only the second data element of data set 3 is contributing as protected data element to the calculation of the score. The result of the analysis of the structure of the data lineage is as illustrated by the following table 1

**Table 1**

| **Data set (DS)** | **Protected Elements** | **Score** |
|---|---|---|
| Data set 1 | - | 0 |
| Data set 2 | DS1(2) | 2 |
| Data set 3 | DS1(1) | 1 |
| Data set 4 | DS1(2)+ DS2(1)+ DS3(1) | 4 |
| Data set 5 | DS3(1) | 1 |

With increasing number of protected data elements (e.g. second data elements) being protected by parameter evaluation for a given data set, the coverage of parameter evaluation of the given data set may be increased. In this case, the parameter should be evaluated for data set 4, because it is associated with the largest number of protected elements (4) and it also has a relatively large number of data sets. By evaluating the parameter for the data elements of data set 4 coverage of parameter evaluation can be achieved which includes the three data elements of data set 4 and extends to 4 further data elements of other data sets which, in this case, are downstream of data set 4. That is, already about 60% of the data elements of the plurality of data sets 1 to 5 can be covered by evaluating data set 4. This coverage is illustrated by the dashed area in Fig. 7. If this degree of coverage is sufficient, only data set 4 needs to be evaluated, which significantly reduces the computational costs required for the evaluation of the parameter in the plurality of data sets while still providing a decent coverage of parameter evaluation within the plurality of data sets.

Coming back to Figure 1B, data set 106 of Fig. 1B may be data set 4 in Fig. 7, data set 112 of Fig. 1B may be data set 2 in Fig. 7, data set 114 of Fig. 1B may be data set 3 in Fig. 7, data set 116 of Fig. 1B may be data set 1 in Fig. 7, and data set 108 of Fig. 1B may be data set 5 in Fig. 7. Since the count of protected data elements affected according to the lineage is taken into account, the claimed approach allows to increase coverage of parameter evaluation beyond linear. That is, means are provided for an assessment of a plurality of data sets for a potential error within a data set, which means allow to reduce the consumption of computational resources significantly while keeping high coverage of parameter evaluation, and hence confidence in the assessment, within the plurality of data sets.

The score calculated for each data set 1 to 5 of Figure 7 is based on one example characteristic of the analyzed structure of the data lineage, wherein the characteristics taken into account for the calculation of the score can alternatively or additionally include other characteristics of analyzed structure of the data lineage. The characteristics that can be incorporated when calculating the score for a data set can include each of the following aspects I) to XIV) and any combination of two, three or more of these aspects I) to XIV). Data elements of a data set can be scored according to these aspects I) to XIV) described below, and the score is summed for the data set. The data sets with the highest score within an application construct are deemed to be the highest ranking and most useful to have further or deeper investigation performed on them and is thus selected for the subset of data sets to be evaluated for the parameter.

Aspects I) to XIV) are as follows:
I) Downstream Number of Elements without pre-existing protection classifications:
   The number of downstream data elements which a given data element is upstream of, for which each of these data elements does not have pre-existing protection (i.e. is not a "protected data element" of a data set) on, can be summed together.
II) Downstream Number of Elements without external inputs:
   The number of downstream protected data elements which a given data element protects, for which each of these downstream protected data elements does not have an additional upstream element can be summed together.
III) Downstream Number of Elements without external inputs which feed into Reports:
   The number of downstream data elements which have been classified as important such as a "Report" classification, for which the given upstream data element is the only input of can be summed together
IV) Downstream Number of Elements without external inputs with Recent Execution Statistics:
   The number of downstream elements for which (e.g. recent) execution metrics exist over a past period of time, such as the previous day, are multiplied by the number of executions over that period. These are then summed together.
V) Downstream Number of Elements without external inputs with Recent Execution Metrics and Record Counts:
   The number of downstream data elements, without external inputs, which do have execution metrics and record counts (e.g. generally provided with execution metrics) are combined together with each execution multiplied by the number of records over the period of time. This value is normally significantly larger than other values, and this value can be scaled accordingly. Scaling can be achieved by comparing the value as a percentage of the total number of records processed over the time period.
VI) Downstream Number of Elements without external inputs with Latest Execution Metrics and Record Counts:
   This aspect is a modification of the previous aspects IV) to V), whereby only the latest execution metric record counts are used instead of the total number of values.
VII) Relationships:
   Foreign Key and primary key information of a given data set is used to assess whether to include the given data set into the subset of data sets. Data sets that are connected by foreign keys can be included in the subset of data sets (critical data sets within the plurality of data sets).
VIII) Primary and Unique Key values:
   Primary keys and unique keys of a given data set in a table can be used as the sole or primary identifier for all elements in a data set. One can thus infer that the value of the primary key is equivalent to the sum of the data elements of that table. If multiple unique keys exist, the value for each key is divided by the total number of unique keys in the data set
IX) Foreign Key values:
   Foreign key relationships depend on other tables in the Enterprise estate, and thus a data element which is referenced by a foreign key provides protection equivalent to the number of elements provided by the primary and unique key values calculated above.
X) Based on Profiling Information:
   Profiling information of a given data set is a statistical overview of the data set itself as well as the (independent) data elements. Profiling information includes min/max values, observed characters, common values and common patterns. Using this information several important characteristics of the data set can be observed. Profiling can itself be seen as an accurate sample of the information contained in the entire estate.
XI) Flow Cardinality:
   Using a profile's cardinality values (i.e. the number of unique values in a field) can be used as a measure of the value for the data element in combination with the previous execution-based and/or record count metrics. Because the cardinality values are generally sparsely computed in an enterprise environment, these should preferably (only) be considered if any of the following is true:
   - The profile information is not sparsely computed in the environment
   - Execution volume metrics are computed in the environment
XII) Data set Information Content:
   The Shannon entropy of each data element of a given data set can also be used similar to the flow cardinality, but the Shannon entropy requires further processing on the value census of a profile.
XIII) Based on Logical Information:
   Logical information is the designed information representing what the data models without technical or physical hinderances. Logical information is often extracted from logical modelling tools, and does not always reflect the real-world implemented data storage features, and thus careful consideration should be used when incorporating this information.
XIV) Logical Relationships:
   Logical relationships can be used like foreign key values described above.

The characteristics that can be incorporated when calculating the score for a given data set can include each of the above aspects I) to XIV) and any combination thereof.

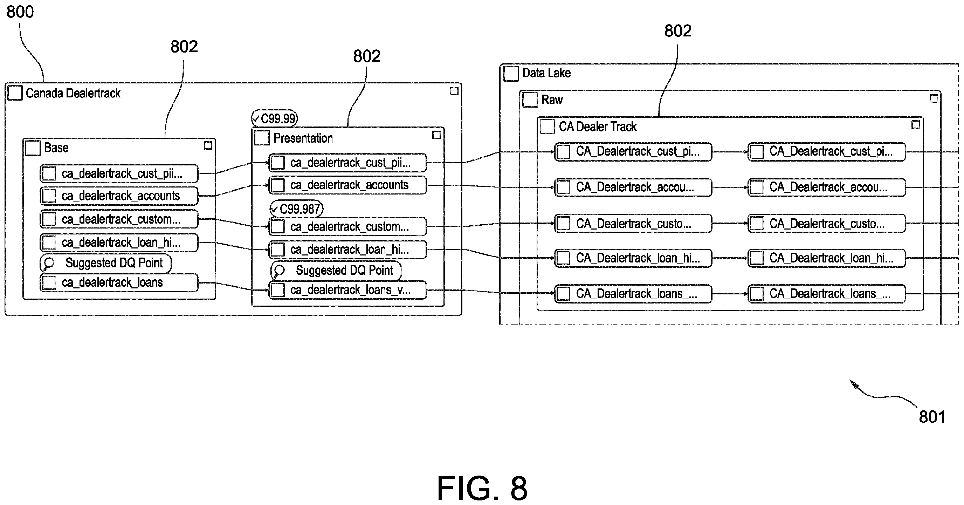

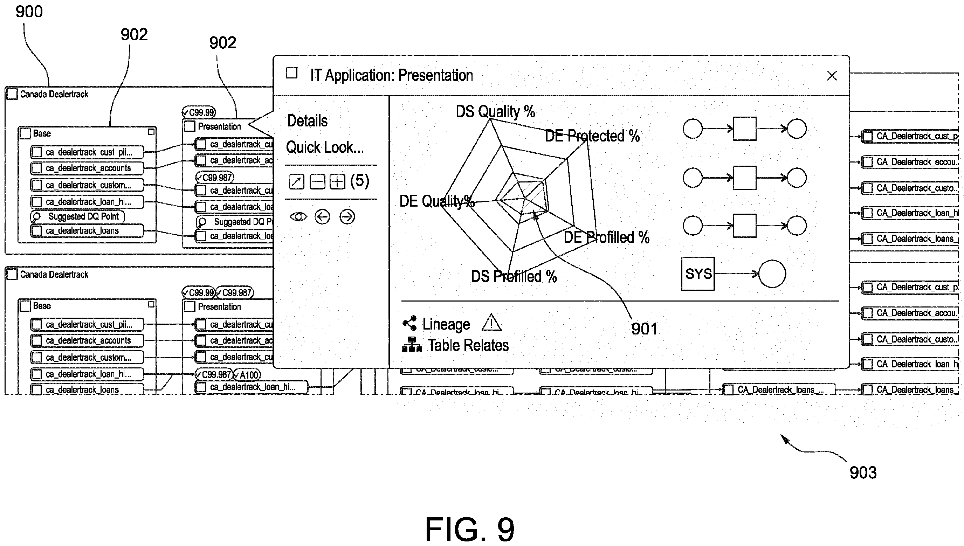

According to preferred aspects of the invention, graphical output is also generated which indicates the state of the data lineage in context of the parameter evaluation and which provides feedback and guidance for a user operating the underlying system. The information illustrated by Figure 7 may be graphically illustrated as shown in Figure 7 within a graphical user interface according to the invention. Figures 8 and 9 illustrates further examples of graphical user interfaces according to the invention.

As shown in Figure 8, the outputting of the indication of the identified subset of one or more data sets may include illustrating, in a graphical user interface 801 (GUI), a graphical indication of the identified subset of one or more data sets, wherein the graphical indication of identified subset of one or more data sets is illustrated in association with a graphical representation 800 of the data lineage. The system may display, in a data lineage diagram 800, a graphical element suggesting a point ("suggested DQ points" in Fig. 8), representing a data set or data element, in the data lineage at which to evaluate the parameter. For example, the system may display a score indicative of the benefit of evaluating the parameter at the point. Figure 8 illustrates an example portion of a data lineage suggested points indicated by displayed scores. In Figure 8, the graphical representation 800 of the data lineage includes graphical representations 802 of the plurality of data sets and the graphical indication of the identified subset of one or more data sets is illustrated in association with the one or more graphical representations of the one or more data sets of the subset. The graphical representations of the plurality of data sets are arranged within the graphical representation 800 of the data lineage in accordance with the relationships among the data sets of the plurality of data sets.

Figure 9 shows an example graphical user interface 903 (GUI) displaying a visualization of coverage provided by evaluation of the parameter at a given data set or point within the data lineage. The system may further provide visualizations of the impact of evaluating the parameter at the point. For example, the system may provide a graphic indicating a number of data sets that would be covered by evaluating parameter at a given point. As shown in Figure 9, the outputting of the indication of the coverage of parameter evaluation within the plurality of data sets includes illustrating, in a graphical user interface 900, a graphical indication 901 of the coverage of parameter evaluation within the plurality of data sets that would be provided by evaluating the identified subset of one or more data sets (e.g. data sets with "suggested DQ points" in Fig. 8, 9). The graphical indication 901 of the coverage of parameter evaluation within the plurality of data sets is illustrated in association with a graphical representation 900 of the data lineage. The graphical representation 900 of the data lineage includes graphical representations 902 of the plurality of data sets and the graphical indication 901 of the coverage of parameter evaluation within the plurality of data sets is illustrated in association with the graphical representations of those data sets (e.g. "suggested DQ points" in Fig. 8, 9) of the plurality of data sets for which the parameter is evaluated by evaluating the parameter for the identified subset of one or more data sets. The graphical indication 901 of the coverage of parameter evaluation can graphically cover portions of the graphical representations of those data sets of the plurality of data sets for which the parameter is evaluated by evaluating the parameter for the identified subset of one or more data sets.

The above-described aspects and embodiments of the technology described herein can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component, including commercially available integrated circuit components known in the art by names such as CPU chips, GPU chips, microprocessor, microcontroller, or co-processor. Alternatively, a processor may be implemented in custom circuitry, such as an ASIC, or semicustom circuitry resulting from configuring a programmable logic device. As yet a further alternative, a processor may be a portion of a larger circuit or semiconductor device, whether commercially available, semi-custom or custom. As a specific example, some commercially available microprocessors have multiple cores such that one or a subset of those cores may constitute a processor. However, a processor may be implemented using circuitry in any suitable format. Instead of the means to carry out the method, a processor and a memory can be used to carry out the method.

Further, it should be appreciated that a "computer", such as client 1, may be embodied in any of a number of forms, such as a rack-mounted computer, a desktop computer, a laptop computer, or a tablet computer. Additionally, a computer may be embedded in a device not generally regarded as a computer but with suitable processing capabilities, including a Personal Digital Assistant (PDA), a smart phone or any other suitable portable or fixed electronic device.

Also, a computer may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers may be interconnected by one or more networks in any suitable form, including as a local area network or a wide area network, such as an enterprise network or the Internet 306. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

In this respect, the present invention may be embodied as a computer-readable storage medium (or multiple computer readable media) (e.g., a computer memory, one or more floppy discs, compact discs (CD), optical discs, digital video disks (DVD), magnetic tapes, flash memories, circuit configurations in Field Programmable Gate Arrays or other semiconductor devices, or other tangible computer storage medium) encoded with one or more programs that, when executed on one or more computers or other processors, perform methods that implement the various embodiments of the invention discussed above. As is apparent from the foregoing examples, a computer readable storage medium may retain information for a sufficient time to provide computer-executable instructions in a non-transitory form. Such a computer readable storage medium or media can be transportable, such that the program or programs stored thereon can be loaded onto one or more different computers or other processors to implement various aspects of the present invention as discussed above. As used herein, the term "computer-readable storage medium" as a preferred example of "computer-readable medium" encompasses only a non-transitory computer-readable medium that can be considered to be a manufacture (i.e., article of manufacture) or a machine. Alternatively or additionally, the invention may be embodied as a computer readable medium other than a computer-readable storage medium, such as a propagating signal.

The terms "application", "algorithm", "service", "program code", "computer program" or "software" are used herein in a generic sense to refer to any type of computer code or set of computer-executable instructions that can be employed to program a computer or other processor to implement various aspects of the present invention as discussed above. The data storage, receiver, subscriber, dispatcher, transformer, and synthesizer may be implemented by computer software and/or computer hardware. Additionally, it should be appreciated that according to one aspect of this embodiment, one or more computer programs that when executed perform methods of the present invention need not reside on a single computer or processor, but may be distributed in a modular fashion amongst a number of different computers or processors to implement various aspects of the present invention.

Computer-executable instructions may be in many forms, such as program modules, executed by one or more computers or other devices. Generally, program modules include routines, programs, objects, components, data structures, etc. that perform particular tasks or implement particular abstract data types. Typically the functionality of the program modules may be combined or distributed as desired in various embodiments.

Also, the data set may be stored in computer-readable media in any suitable form. For simplicity of illustration, data sets may be shown to have data set entries. However, any suitable mechanism may be used to establish locations within the data set to store data, such as parameter values.

Various aspects of the present invention may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

Also, the invention may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Further, some actions are described as taken by a "user" or "player". It should be appreciated that a "user" or "player" need not be a single individual, and that for example, actions attributable to a "user" or "player" may be performed by a team of individuals and/or an individual in combination with computer-assisted tools or other mechanisms. It should be appreciated that a "user" or "player" need not be an individual and could be a machine, such as in form of a bot.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

Further, though advantages of the present invention are indicated, it should be appreciated that not every embodiment of the invention described herein will include every described advantage. Some aspects and embodiments may not implement any features described as advantageous herein and in some instances one or more of the described features may be implemented to achieve further embodiments. Accordingly, this description and these drawings are by way of example only.

The present invention can (alternatively) be described by one or more of the following numbered aspects:

### ASPECTS

1. Computer-implemented method, comprising:
   obtaining a data lineage whose structure specifies relationships among data sets of a plurality of data sets;
   analyzing the structure of the data lineage;
   based on a result of the analyzing, identifying a subset of the plurality of data sets for which a parameter is to be evaluated, wherein the subset includes one or more of the data sets, and wherein the parameter is for indicating a potential error within a data set; and
   outputting an indication of the identified subset of one or more data sets.
2. The method of aspect 1, wherein the subset of the plurality of data sets for which the parameter is to be evaluated is identified such that a coverage of parameter evaluation within the plurality of data sets that would be provided by evaluating the parameter for the subset of the plurality of data sets exceeds a predetermined threshold coverage of parameter evaluation.
3. The method of aspect 1 or 2, wherein the analyzing of the structure of the data lineage includes:
   calculating a score for each data set of the plurality of data sets such that a score for a given data set of the plurality of data sets is based on one or more characteristics of the analyzed structure of the data lineage and indicates a coverage of parameter evaluation within the plurality of data sets that would be provided by evaluating the parameter for the given data set.
4. The method of aspect 3, wherein the coverage of parameter evaluation within the plurality of data sets that would be provided by evaluating the parameter for the subset of the plurality of data sets is determined based on the scores calculated for the one or more data sets in the subset.
5. The method of aspect 3 or 4, further comprising identifying the subset of the plurality of data sets for which the parameter is to be evaluated in accordance with the scores calculated for the data sets of the plurality of data sets.
6. The method of any one of the preceding aspects 1 to 5, wherein each data set of the plurality of data sets includes one or more data elements.
7. The method of aspect 6, wherein the coverage of parameter evaluation of the given data set is in accordance with a number of data elements of the plurality of data sets for which the parameter is evaluated by evaluating the parameter for the one or more data elements of the given data set.
8. The method of aspect 6 or 7, wherein the one or more characteristics include a number of first downstream data elements which are downstream of one or more data elements of the given data set in the data lineage such that the first downstream elements depend on one or more data elements of the given data set, wherein each of the first downstream data elements is not associated with an evaluation of the parameter for the first downstream data element.
9. The method of any one of aspects 3 to 5, wherein the one or more characteristics include a number of second, preferably downstream, data elements, such as of other data sets, which depend on one or more data elements of the given data set in the data lineage such that the second elements are data elements that do exclusively depend on the one or more data elements of the given data set or that do exclusively depend on other data elements that exclusively depend on the one or more data elements of the given data set, preferably wherein each of the second data elements does not depend on a data element of another data set of the plurality of data sets that is upstream to the second data element in the lineage.
10. The method of any one of aspects 6 to 9, wherein the one or more characteristics include a number of third downstream data elements which are downstream of one or more data elements of the given data set in the data lineage such that the third downstream elements depend on one or more data elements of the given data set, wherein each of the third downstream data elements is associated with execution metrics over a predetermined, and preferably past or recent, period of time.
11. The method of aspect 10, wherein the number of the third downstream data elements is multiplied by the total or latest number of executions, or a total or latest number of records provided with the execution metrics, involving the third downstream data elements over that period of time for the one or more characteristics.
12. The method of any one of aspects 6 to 11, wherein the one or more characteristics include a number of fourth downstream data elements which are downstream of one or more data elements of the given data set in the data lineage such that the fourth downstream elements depend on one or more data elements of the given data set, wherein each of the fourth downstream data elements have been classified as key data elements.
13. The method of any one of aspects 8 to 12, wherein each of the third downstream data elements does not depend on another, preferably external, input.
14. The method of any one of aspects 6 to 13 wherein the one or more characteristics include profiling information of the given data set such as foreign key and/or primary key information, minimum or maximum value, unique values in a field, common values, Shannon Entropy and/or common patterns within the one or more data elements of the given data set.
15. The method of any one of aspects 6 to 14 wherein the one or more characteristics include a number of inputs to the given data set on which inputs the one or more data elements of the data sets depend and/or number of outputs from the given data set on which other data sets of the plurality of data sets depend and/or a type of transformation performed on the given data set.
16. The method of any one of the preceding aspects 1 to 15, wherein the outputting of the indication of the identified subset of one or more data sets includes illustrating, in a graphical user interface, a graphical indication of the identified subset of one or more data sets.
17. The method of aspect 16, wherein the graphical indication of identified subset of one or more data sets is illustrated in association with a graphical representation of the data lineage.
18. The method of aspect 16 or 17, wherein the graphical representation of the data lineage includes graphical representations of the plurality of data sets and the graphical indication of the identified subset of one or more data sets is illustrated in association with the one or more graphical representations of the one or more data sets of the subset, preferably wherein the graphical representations of the plurality of data sets are arranged within the graphical representation of the data lineage in accordance with the relationships among the data sets of the plurality of data sets.
19. The method of any one of aspects 16 to 18, wherein the graphical indication of the identified subset of one or more data sets includes one or more of the scores calculated for one or more data sets in the subset.
20. The method of any one of aspects 5 to 19, further comprising: outputting an indication of the coverage of parameter evaluation within the plurality of data sets that would be provided by evaluating the identified subset of one or more data sets.
21. The method of aspect 20, wherein the indication of the coverage of parameter evaluation within the plurality of data sets includes an indication of a number of data sets and/or data elements for which the parameter would be evaluated by evaluating the parameter for the identified subset of one or more data sets.
22. The method of aspect 20 or 21, wherein the outputting of the indication of the coverage of parameter evaluation within the plurality of data sets includes illustrating, in a graphical user interface, a graphical indication of the coverage of parameter evaluation within the plurality of data sets that would be provided by evaluating the identified subset of one or more data sets.
23. The method of aspect 22, wherein the graphical indication of the coverage of parameter evaluation within the plurality of data sets is illustrated in association with a graphical representation of the data lineage.
24. The method of aspect 22 or 23, wherein the graphical representation of the data lineage includes graphical representations of the plurality of data sets and the graphical indication of the coverage of parameter evaluation within the plurality of data sets is illustrated in association with the graphical representations of those data sets of the plurality of data sets for which the parameter is evaluated by evaluating the parameter for the identified subset of one or more data sets, preferably wherein the graphical indication of the coverage of parameter evaluation is graphically covering portions of the graphical representations of those data sets of the plurality of data sets for which the parameter is evaluated by evaluating the parameter for the identified subset of one or more data sets.
25. The method of any one of the preceding aspects 1 to 24, wherein the one or more characteristics include a number of data records or data elements associated with the given data set and/or a storage size of the given data set.
26. The method of any one of the preceding aspects 1 to 25, wherein the parameter is a quality of data or program code associated with the data set.
27. The method of any one of the preceding aspects 1 to 26, wherein the outputting includes outputting, to an application configured to evaluate the parameter for a data set, a report indicating the identified subset of one or more data sets.
28. The method of aspect 25, further comprising:
   causing the application to evaluate, for the identified subset of one or more data sets, the parameter in accordance with one or more criteria.
29. The method of any one of the preceding aspects 1 to 28, further comprising generating the data lineage at least in part by performing (a) analyzing source code of at least one computer program configured to access at least some of the plurality of data sets to identify one or more data sets inputted to and accessed by the computer program, one or more transformations applied to inputs of the computer program and/or computations performed using inputs of the computer program, and one or more outputs of the computer program, and/or (b) analyzing information obtained during runtime of the at least one computer program including analyzing one or more logs generated during runtime of the computer program to identify inputs of the computer program, one or more transformations applied to inputs of the computer program and/or computations performed using inputs of the computer program, and one or more outputs of the computer program.
30. The method of any one of the preceding aspects 3 to 29, wherein the one or more characteristics include the characteristics according to aspect I).
31. The method of any one of the preceding aspects 3 to 30, wherein the one or more characteristics include the characteristics according to aspect II).
32. The method of any one of the preceding aspects 3 to 31, wherein the one or more characteristics include the characteristics according to aspect III).
33. The method of any one of the preceding aspects 3 to 32, wherein the one or more characteristics include the characteristics according to aspect IV).
34. The method of any one of the preceding aspects 3 to 33, wherein the one or more characteristics include the characteristics according to aspect V).
35. The method of any one of the preceding aspects 3 to 34, wherein the one or more characteristics include the characteristics according to aspect VI).
36. The method of any one of the preceding aspects 3 to 35, wherein the one or more characteristics include the characteristics according to aspect VII).
37. The method of any one of the preceding aspects 3 to 36, wherein the one or more characteristics include the characteristics according to aspect VIII).
38. The method of any one of the preceding aspects 3 to 37, wherein the one or more characteristics include the characteristics according to aspect IX).
39. The method of any one of the preceding aspects 3 to 38, wherein the one or more characteristics include the characteristics according to aspect X).
40. The method of any one of the preceding aspects 3 to 39, wherein the one or more characteristics include the characteristics according to aspect XI).
41. The method of any one of the preceding aspects 3 to 40, wherein the one or more characteristics include the characteristics according to aspect XII).
42. The method of any one of the preceding aspects 3 to 41, wherein the one or more characteristics include the characteristics according to aspect XIII).
43. The method of any one of the preceding aspects 3 to 42, wherein the one or more characteristics include the characteristics according to aspect XIV).
44. A computer-readable medium comprising instructions which, when executed by a computer, cause the computer to carry out the method of any one preceding aspects 1 to 43.
45. A data processing apparatus comprising means for carrying out the method of any one of aspects 1 to 43.
46. A computer program comprising instructions which, when the computer program is executed by a computer, cause the computer to carry out the method of any one of aspects 1 to 43.

The present invention is defined by the following independent claims. Some of the preferred embodiments are described by the following dependent claims as well as by the above description and the enclosed figures. Having described several aspects of embodiments of this invention, it is to be appreciated that various alterations, modifications, and improvements of these aspects are possible within the scope of the invention as defined by the appended claims.

## Claims

1. Computer-implemented method, comprising:
obtaining a data lineage whose structure specifies relationships among data sets of a plurality of data sets;
analyzing the structure of the data lineage;
based on a result of the analyzing, identifying a subset of the plurality of data sets for which a parameter is to be evaluated, wherein the subset includes one or more of the data sets, and wherein the parameter is for indicating a potential error within a data set; and
outputting an indication of the identified subset of one or more data sets.

2. The method of claim 1, wherein the subset of the plurality of data sets for which the parameter is to be evaluated is identified such that a coverage of parameter evaluation within the plurality of data sets that would be provided by evaluating the parameter for the subset of the plurality of data sets exceeds a predetermined threshold coverage of parameter evaluation.

3. The method of claim 1 or 2, wherein the analyzing of the structure of the data lineage includes:
calculating a score for each data set of the plurality of data sets such that a score for a given data set of the plurality of data sets is based on one or more characteristics of the analyzed structure of the data lineage and indicates a coverage of parameter evaluation within the plurality of data sets that would be provided by evaluating the parameter for the given data set.

4. The method of claim 3, wherein the coverage of parameter evaluation within the plurality of data sets that would be provided by evaluating the parameter for the subset of the plurality of data sets is determined based on the scores calculated for the one or more data sets in the subset.

5. The method of claim 3 or 4, further comprising identifying the subset of the plurality of data sets for which the parameter is to be evaluated in accordance with the scores calculated for the data sets of the plurality of data sets.

6. The method of any one of the preceding claims, wherein each data set of the plurality of data sets includes one or more data elements,
wherein the coverage of parameter evaluation of the given data set is in accordance with a number of data elements of the plurality of data sets for which the parameter is evaluated by evaluating the parameter for the one or more data elements of the given data set and/or
wherein the one or more characteristics include a number of first downstream data elements which are downstream of one or more data elements of the given data set in the data lineage such that the first downstream elements depend on one or more data elements of the given data set, wherein each of the first downstream data elements is not associated with an evaluation of the parameter for the first downstream data element.

7. The method of any one of claims 3 to 5, wherein the one or more characteristics include a number of second, preferably downstream, data elements, such as of other data sets, which depend on one or more data elements of the given data set in the data lineage such that the second elements are data elements that do exclusively depend on the one or more data elements of the given data set or that do exclusively depend on other data elements that exclusively depend on the one or more data elements of the given data set.

8. The method of any one of claims 6 to 8, wherein the one or more characteristics include a number of third downstream data elements which are downstream of one or more data elements of the given data set in the data lineage such that the third downstream elements depend on one or more data elements of the given data set, wherein each of the third downstream data elements is associated with execution metrics over a predetermined, and preferably past or recent, period of time, preferably
wherein the number of the third downstream data elements is multiplied by the total or latest number of executions, or a total or latest number of records provided with the execution metrics, involving the third downstream data elements over that period of time for the one or more characteristics.

9. The method of any one of claims 6 to 8, wherein the one or more characteristics include a number of fourth downstream data elements which are downstream of one or more data elements of the given data set in the data lineage such that the fourth downstream elements depend on one or more data elements of the given data set, wherein each of the fourth downstream data elements have been classified as key data elements, preferably
wherein each of the third downstream data elements does not depend on another, preferably external, input.

10. The method of any one of the preceding claims, wherein the outputting of the indication of the identified subset of one or more data sets includes illustrating, in a graphical user interface, a graphical indication of the identified subset of one or more data sets, wherein the graphical indication of identified subset of one or more data sets is illustrated in association with a graphical representation of the data lineage, and
wherein the graphical representation of the data lineage includes graphical representations of the plurality of data sets and the graphical indication of the identified subset of one or more data sets is illustrated in association with the one or more graphical representations of the one or more data sets of the subset, wherein the graphical representations of the plurality of data sets are arranged within the graphical representation of the data lineage in accordance with the relationships among the data sets of the plurality of data sets, preferably
wherein the graphical indication of the identified subset of one or more data sets includes one or more of the scores calculated for one or more data sets in the subset.

11. The method of any one of claims 5 to 10, further comprising: outputting an indication of the coverage of parameter evaluation within the plurality of data sets that would be provided by evaluating the identified subset of one or more data sets,
wherein the indication of the coverage of parameter evaluation within the plurality of data sets includes an indication of a number of data sets and/or data elements for which the parameter would be evaluated by evaluating the parameter for the identified subset of one or more data sets,
, wherein the outputting of the indication of the coverage of parameter evaluation within the plurality of data sets includes illustrating, in a graphical user interface, a graphical indication of the coverage of parameter evaluation within the plurality of data sets that would be provided by evaluating the identified subset of one or more data sets, and
wherein the graphical indication of the coverage of parameter evaluation within the plurality of data sets is illustrated in association with a graphical representation of the data lineage.

12. The method of claim 11, wherein the graphical representation of the data lineage includes graphical representations of the plurality of data sets and the graphical indication of the coverage of parameter evaluation within the plurality of data sets is illustrated in association with the graphical representations of those data sets of the plurality of data sets for which the parameter is evaluated by evaluating the parameter for the identified subset of one or more data sets, preferably wherein the graphical indication of the coverage of parameter evaluation is graphically covering portions of the graphical representations of those data sets of the plurality of data sets for which the parameter is evaluated by evaluating the parameter for the identified subset of one or more data sets.

13. The method of any one of the preceding claims, wherein the one or more characteristics include a number of data elements or data records associated with the given data set and/or a storage size of the given data set.

14. The method of any one of the preceding claims, wherein the parameter is a quality of data or program code associated with the data set.

15. The method of any one of the preceding claims, wherein the outputting includes outputting, to an application configured to evaluate the parameter for a data set, a report indicating the identified subset of one or more data sets, preferably further comprising:
causing the application to evaluate, for the identified subset of one or more data sets, the parameter in accordance with one or more criteria.

16. The method of any one of the preceding claims, further comprising generating the data lineage at least in part by performing (a) analyzing source code of at least one computer program configured to access at least some of the plurality of data sets to identify one or more data sets inputted to and accessed by the computer program, one or more transformations applied to inputs of the computer program and/or computations performed using inputs of the computer program, and one or more outputs of the computer program, and/or (b) analyzing information obtained during runtime of the at least one computer program including analyzing one or more logs generated during runtime of the computer program to identify inputs of the computer program, one or more transformations applied to inputs of the computer program and/or computations performed using inputs of the computer program, and one or more outputs of the computer program.

17. A computer-readable medium comprising instructions which, when executed by a computer, cause the computer to carry out the method of any one preceding claims.

18. A data processing apparatus comprising means for carrying out the method of any one of claims 1 to 16.

19. A computer program comprising instructions which, when the computer program is executed by a computer, cause the computer to carry out the method of any one of claims 1 to 16.

## Amended claims

### Amended claims in accordance with Rule 137(2) EPC.

1. Computer-implemented method, comprising:
obtaining a data lineage (100, 200A, 700) whose structure specifies relationships among data sets (1-5, 102-116, 202A) of a plurality (1-5,102-116, 202A) of data sets;
analyzing the structure of the data lineage (100, 200A, 700);
based on a result of the analyzing, identifying a subset of the plurality (1-5, 102-116, 202A) of data sets for which a parameter is to be evaluated, wherein the subset includes one or more of the data sets (1-5, 102-116, 202A), and wherein the parameter is for indicating a potential error within a data set (1-5, 102-116, 202A);
outputting an indication of the identified subset of one or more data sets (1-5, 102-116, 202A),
wherein the outputting includes outputting, to an application configured to evaluate the parameter for a data set (1-5, 102-116, 202A), an indication of the identified subset of one or more data sets (1-5, 102-116, 202A); and
causing the application to evaluate, for the identified subset of one or more data sets (1-5, 102-116, 202A), the parameter in accordance with one or more criteria.

2. The method of claim 1, wherein the subset of the plurality (1-5, 102-116, 202A) of data sets for which the parameter is to be evaluated is identified such that a coverage of parameter evaluation within the plurality (1-5, 102-116, 202A) of data sets that would be provided by evaluating the parameter for the subset of the plurality (1-5, 102-116, 202A) of data sets exceeds a predetermined threshold coverage of parameter evaluation.

3. The method of claim 1 or 2, wherein the analyzing of the structure of the data lineage (100, 200A, 700) includes:
calculating a score for each data set (1-5, 102-116, 202A) of the plurality (1-5, 102-116, 202A) of data sets such that a score for a given data set (1-5, 102-116, 202A) of the plurality (1-5, 102-116, 202A) of data sets is based on one or more characteristics of the analyzed structure of the data lineage (100, 200A, 700) and indicates a coverage of parameter evaluation within the plurality (1-5, 102-116, 202A) of data sets that would be provided by evaluating the parameter for the given data set (1-5, 102-116, 202A).

4. The method of claim 3, wherein the coverage of parameter evaluation within the plurality (1-5, 102-116, 202A) of data sets that would be provided by evaluating the parameter for the subset of the plurality (1-5, 102-116, 202A) of data sets is determined based on the scores calculated for the one or more data sets (1-5, 102-116, 202A) in the subset.

5. The method of claim 3 or 4, further comprising identifying the subset of the plurality (1-5, 102-116, 202A) of data sets for which the parameter is to be evaluated in accordance with the scores calculated for the data sets (1-5, 102-116, 202A) of the plurality (1-5, 102-116, 202A) of data sets.

6. The method of any one of the preceding claims, wherein each data set (1-5, 102-116, 202A) of the plurality (1-5, 102-116, 202A) of data sets includes one or more data elements,
wherein the coverage of parameter evaluation of the given data set (1-5, 102-116, 202A) is in accordance with a number of data elements of the plurality (1-5,102-116, 202A) of data sets for which the parameter is evaluated by evaluating the parameter for the one or more data elements of the given data set (1-5, 102-116, 202A) and/or
wherein the one or more characteristics include a number of first downstream data elements which are downstream of one or more data elements of the given data set (1-5, 102-116, 202A) in the data lineage (100, 200A, 700) such that the first downstream elements depend on one or more data elements of the given data set (1-5, 102-116, 202A), wherein each of the first downstream data elements is not associated with an evaluation of the parameter for the first downstream data element.

7. The method of any one of claims 3 to 5, wherein the one or more characteristics include a number of second, preferably downstream, data elements, such as of other data sets (1-5,102-116, 202A), which depend on one or more data elements of the given data set (1-5,102-116, 202A) in the data lineage (100, 200A, 700) such that the second elements are data elements that do exclusively depend on the one or more data elements of the given data set (1-5, 102-116, 202A) or that do exclusively depend on other data elements that exclusively depend on the one or more data elements of the given data set (1-5, 102-116, 202A).

8. The method of any one of claims 6 to 7, wherein the one or more characteristics include a number of third downstream data elements which are downstream of one or more data elements of the given data set (1-5, 102-116, 202A) in the data lineage (100, 200A, 700) such that the third downstream elements depend on one or more data elements of the given data set (1-5, 102-116, 202A), wherein each of the third downstream data elements is associated with execution metrics over a predetermined, and preferably past or recent, period of time, preferably
wherein the number of the third downstream data elements is multiplied by the total or latest number of executions, or a total or latest number of records provided with the execution metrics, involving the third downstream data elements over that period of time for the one or more characteristics.

9. The method of any one of claims 6 to 8, wherein the one or more characteristics include a number of fourth downstream data elements which are downstream of one or more data elements of the given data set (1-5, 102-116, 202A) in the data lineage (100, 200A, 700) such that the fourth downstream elements depend on one or more data elements of the given data set (1-5, 102-116, 202A), wherein each of the fourth downstream data elements have been classified as key data elements, preferably wherein each of the third downstream data elements does not depend on another, preferably external, input.

10. The method of any one of the preceding claims, wherein the outputting of the indication of the identified subset of one or more data sets (1-5, 102-116, 202A) includes illustrating, in a graphical user interface (801, 903), a graphical indication of the identified subset of one or more data sets (1-5, 102-116, 202A),
wherein the graphical indication of identified subset of one or more data sets (1-5, 102-116, 202A) is illustrated in association with a graphical representation (800, 900) of the data lineage, and
wherein the graphical representation (800, 900) of the data lineage includes graphical representations (902) of the plurality of data sets and the graphical indication of the identified subset of one or more data sets (1-5, 102-116, 202A) is illustrated in association with the one or more graphical representations of the one or more data sets (1-5,102-116, 202A) of the subset, wherein the graphical representations (902) of the plurality of data sets are arranged within the graphical representation (800, 900) of the data lineage in accordance with the relationships among the data sets (1-5, 102-116, 202A) of the plurality (1-5, 102-116, 202A) of data sets, preferably
wherein the graphical indication of the identified subset of one or more data sets (1-5, 102-116, 202A) includes one or more of the scores calculated for one or more data sets (1-5,102-116, 202A) in the subset.

11. The method of any one of claims 5 to 10, further comprising: outputting an indication of the coverage of parameter evaluation within the plurality (1-5, 102-116, 202A) of data sets that would be provided by evaluating the identified subset of one or more data sets (1-5, 102-116, 202A),
wherein the indication of the coverage of parameter evaluation within the plurality (1-5, 102-116, 202A) of data sets includes an indication of a number of data sets (1-5, 102-116, 202A) and/or data elements for which the parameter would be evaluated by evaluating the parameter for the identified subset of one or more data sets (1-5, 102-116, 202A),
wherein the outputting of the indication of the coverage of parameter evaluation within the plurality (1-5, 102-116, 202A) of data sets includes illustrating, in a graphical user interface (801, 903), a graphical indication of the coverage of parameter evaluation within the plurality (1-5, 102-116, 202A) of data sets that would be provided by evaluating the identified subset of one or more data sets (1-5, 102-116, 202A), and
wherein the graphical indication of the coverage of parameter evaluation within the plurality (1-5, 102-116, 202A) of data sets is illustrated in association with a graphical representation (800, 900) of the data lineage.

12. The method of claim 11, wherein the graphical representation (800, 900) of the data lineage includes graphical representations (902) of the plurality of data sets and the graphical indication of the coverage of parameter evaluation within the plurality (1-5, 102-116, 202A) of data sets is illustrated in association with the graphical representations of those data sets (1-5, 102-116, 202A) of the plurality (1-5, 102-116, 202A) of data sets for which the parameter is evaluated by evaluating the parameter for the identified subset of one or more data sets (1-5, 102-116, 202A), preferably wherein the graphical indication of the coverage of parameter evaluation is graphically covering portions of the graphical representations of those data sets (1-5, 102-116, 202A) of the plurality (1-5, 102-116, 202A) of data sets for which the parameter is evaluated by evaluating the parameter for the identified subset of one or more data sets (1-5, 102-116, 202A).

13. The method of any one of the preceding claims, wherein the one or more characteristics include a number of data elements or data records associated with the given data set (1-5, 102-116, 202A) and/or a storage size of the given data set (1-5, 102-116, 202A).

14. The method of any one of the preceding claims, wherein the parameter is a quality of data or program code associated with the data set (1-5, 102-116, 202A).

15. The method of any one of the preceding claims, further comprising generating the data lineage (100, 200A, 700) at least in part by performing (a) analyzing source code of at least one computer program configured to access at least some of the plurality (1-5, 102-116, 202A) of data sets to identify one or more data sets (1-5, 102-116, 202A) inputted to and accessed by the computer program, one or more transformations applied to inputs of the computer program and/or computations performed using inputs of the computer program, and one or more outputs of the computer program, and/or (b) analyzing information obtained during runtime of the at least one computer program including analyzing one or more logs generated during runtime of the computer program to identify inputs of the computer program, one or more transformations applied to inputs of the computer program and/or computations performed using inputs of the computer program, and one or more outputs of the computer program.

16. A computer-readable medium comprising instructions which, when executed by a computer, cause the computer to carry out the method of any one preceding claims.

17. A data processing apparatus comprising means for carrying out the method of any one of claims 1 to 15.

18. A computer program comprising instructions which, when the computer program is executed by a computer, cause the computer to carry out the method of any one of claims 1 to 15.
